# EUROPÄISCHE PATENTSCHRIFT

(11) **EP 2 627 517 B1**
(45) Veröffentlichungstag und Bekanntmachung des Hinweises auf die Patenterteilung: **25.05.2016**
(21) Anmeldenummer: 11770410.6
(22) Anmeldetag: 07.10.2011
(51) Int. Cl.: B41M 3/14, B42D 15/00, G02B 3/00, B41M 5/24, B42D 25/41, B42D 25/425, B42D 25/43, B42D 25/355, B42D 25/29

(54) **VERFAHREN ZUM HERSTELLEN EINES SICHERHEITSDOKUMENTS MIT EINEM BETRACHTUNGSWINKELABHÄNGIGEN SICHERHEITSMERKMAL**
METHOD OF PRODUCING A SECURITY DOCUMENT HAVING A VIEWING ANGLE DEPENDENT SECURITY FEATURE
PROCÉDÉ DE PRODUCTION D'UN DOCUMENT DE SÉCURITÉ MUNI D'UNE CARACTÉRISTIQUE DE SÉCURITÉ DÉPENDANT DE L'ANGLE D'OBSERVATION

(30) Priorität: 13.10.2010 DE 102010048772
(43) Veröffentlichungstag der Anmeldung: 21.08.2013
(73) Patentinhaber: Bundesdruckerei GmbH, 10969 Berlin (DE)
(72) Erfinder: BOSIEN, Andreas, 12439 Berlin (DE); KUNATH, Christian, 12203 Berlin (DE); LEOPOLD, André, 10119 Berlin (DE); MÄRTENS, Detlef, 13599 Berlin (DE)
(74) Vertreter: Patentanwälte Bressel und Partner mbB
(86) Internationale Anmeldenummer: PCT/EP2011/067588
(87) Internationale Veröffentlichungsnummer: WO 2012/049096

(56) Entgegenhaltungen:
- EP-A2- 1 698 485
- WO-A1-02/074539
- US-A- 6 084 713

## Beschreibung

Die Erfindung betrifft ein Verfahren zum Herstellen eines Sicherheitsdokuments mit einem betrachtungswinkelabhängigen Sicherheitsmerkmal. Insbesondere betrifft eine Erfindung solche Sicherheitsdokumente, die an einer Oberfläche optische Strukturen aufweisen, welche unter unterschiedlichen Betrachtungswinkeln des Sicherheitsdokuments unterschiedliche Anteile einer in dem Dokumentkörper gespeicherten Information abbilden, so dass unter unterschiedlichen Betrachtungswinkeln des Sicherheitsdokuments unterschiedliche Informationsgehalte wahrnehmbar sind.

### Stand der Technik

Aus der WO 03/022598 A1 ist ein Aufzeichnungsträger bekannt, der eine obere Schicht aufweist, die auf ihrer Außenseite eine Mehrzahl von Lentikularlinsen und rückseitig ein Darstellungselement besitzt, das beim Kippen des Aufzeichnungsträgers um wenigstens eine Achse beweglich erscheint. Die Lentikularlinsen erstrecken sich lediglich über einen Teilbereich der gesamten Außenseite. Das Darstellungselement ist ein Sicherheitselement, das auf einer inneren Kartenschicht aufgedruckt ist. Nicht angegeben ist, wie die Lentikularlinsen in den Dokumentkörper eingebracht werden.

Aus der DE 10 2008 008 044 A1 ist ein kostengünstiges Verfahren zur Herstellung von Sicherheits- und/oder Wertdokumenten bekannt, die geeignet sind, flexible und fälschungssichere Strukturen mit geringer thermischer Belastung herzustellen, wobei die Oberflächenstruktur in die Oberseite und/oder die Unterseite von zur Herstellung von Dokumenten verwendeten Substraten mit einer Prägeeinrichtung, die mindestens ein Prägewerkzeug mit jeweils einer Kontaktfläche aufweist, unter Anwendung eines Prägedrucks und unter Anwendung von Ultraschall eingeprägt wird, wobei die Kontaktfläche genauso groß ist wie oder größer ist als die Oberseite oder die Unterseite des Substrats. Es sind Ausführungsformen des Herstellungsverfahrens beschrieben, die Mikrolinsen in einen Dokumentkörper einprägen.

Aus der EP 1 698 485 A2 ist ein Identifikationsdokument mit einem Lentikularwasserzeichen bekannt. Ein Identifikationsdokument umfasst ein transparentes Fenster, welches einen Mikrodruck mit Lentikulartechnologie umfasst, um inhaberspezifische Informationen sowohl auf mikroskopischen als auch makroskopischen Niveau aufzuzeichnen. Hierzu ist ein Fenster in eine opake Schicht gestanzt und laserfähige transparente Folien auf beide Seiten der opaken Schicht laminiert. Hierüber sind jeweils transparente äußere Schutzschichten laminiert. Auf einer Vorderseite des Fensters ist eine Lentikularlinsenanordnung ausgebildet. Inhaberspezifische Informationen sind in Form eines Mikrodrucks unter Verwendung eines Lasers in die Rückseite des Fensters eingeschrieben. Eine sogenannte phasenversetzte Abbildung umfasst alphanumerische Zeichen, die mit Hilfe einer Vergrößerungsvorrichtung lesbar sind, jedoch ebenfalls so angeordnet sind, dass sie eine makroskopische Lentikularabbildung formen, die durch die Lentikularlinsenanordnung sichtbar ist. Sowohl die mikroskopische als auch die makroskopische Information können mit identischen Daten in dem Dokument verglichen werden, die auf dieses aufgedruckt sind.

Aus der WO 02/074539 A1 sind ein Verfahren und eine Vorrichtung zum Bilden eines optischen Lentikularsystems bekannt, bei denen eine zusammengesetzte Abbildung durch eine eingeformte Linse unter einem ersten Winkel sichtbar ist und ein Objekt oder eine Abbildung, die in einem vorbestimmten Abstand unterhalb der zusammengesetzten Abbildung angeordnet ist, unter einem zweiten Winkel sichtbar ist.

Aus der US 6,084,713 ist ein optisches Lentikularsystem bekannt, bei dem eine zusammengesetzte Abbildung unter einem ersten Winkel durch ein Linsenpapier sichtbar ist und ein Objekt oder eine Abbildung, die in einem vorgewählten Abstand unterhalb der zusammengesetzten Abbildung angeordnet ist, aus einem zweiten Winkel sichtbar ist.

Aus der DE 10 2008 031 653 A1 sind ein Verfahren und eine Vorrichtung zum Einbringen eines Sicherheitsmerkmals in ein Wert- oder Sicherheitsdokument bekannt, wobei das Wert- oder Sicherheitsdokument einen Dokumentenkörper mit mindestens einer thermoplastischen Oberflächenschicht umfasst, wobei das Verfahren die Schritte aufweist: Bereitstellen des Dokumentenkörpers; Bereitstellen und/oder Erstellen einer strukturierten Sonotrode, die mit einer Schallquelle gekoppelt ist oder wird; Anordnen des Dokumentkörpers relativ zu der Sonotrode; Inkontaktbringen der Sonotrode und der Oberflächenschicht des Dokumentkörpers und zeitgleiches Einkoppeln von Schallwellen über die Sonotrode in das Wert- oder Sicherheitsdokument, so dass sich eine Reliefstruktur in der Oberflächenschicht ausbildet, wobei die Sonotrode mit einer Strukturierung bereitgestellt wird und/oder hergestellt wird, die eine Solleindringebene aufweist und die Sonotrode so strukturiert ist, dass aus der Solleindringebene vorspringende Bereiche und in die Solleindringebene hineinragende vertiefte Bereiche existieren, wobei die Sonotrode während der Schalleinkopplung unter Anwendung von Druck in den Dokumentkörper bewegt wird, bis die Solleindringebene mit einem Dokumentkörperoberflächensollniveau übereinstimmt und die vorspringenden Bereiche vertiefte Reliefstrukturen und die vertieften Bereiche hervorspringende Reliefstrukturen in der Oberflächenschicht erzeugen.

Aus der EP 0 216 947 A1 ist ein kartenförmiger Datenträger mit einem Substrat und mindestens einer transparenten Deckfolie bekannt. Das Substrat wird unter Anwendung eines Laserstrahls mit durch die Deckfolie hindurch erkennbaren Informationen versehen, wobei die transparente Deckfolie ein den Informationsbereich zumindest teilweise überlappendes vor dem Aufzeichnen der Information aufgebrachtes Relief trägt, welches durch seine optische Linsenwirkung die Informationsaufzeichnung charakteristisch verändert. In Abhängigkeit von der Einstrahlrichtung des Laserlichts wird die Information an unterschiedlichen Orten in dem Substrat gespeichert. Ebenso werden bei einer Sichtprüfung unterschiedliche Informationen in Abhängigkeit von einem Betrachtungswinkel wahrgenommen.

Aus der EP 0 219 012 B1 ist ein Datenträger bekannt, bei dem in einem inneren Volumenbereich Informationen mittels eines Laserstrahls eingebracht sind, die in Form von Änderungen der optischen Eigenschaften aufgrund einer irreversiblen, durch den Laserstrahl bewirkten Materialänderung sichtbar sind. Beschrieben sind beispielsweise kartenförmige Datenträger, die ein Linsenraster an einer Oberfläche aufweisen. Das Linsenraster kann bei einem Kaschiervorgang eingeprägt werden, indem in eine entsprechende Kaschierplatte ein Negativ des Linsenrasters eingearbeitet wird. Ebenso kann eine thermostabile Prägematrize verwendet werden, die zwischen der transparenten Deckschicht und der Kaschierplatte eingelegt wird. Es ist ferner beschrieben, dass die Karte mittels eines Laminierverfahrens hergestellt werden kann und das Linsenraster anschließend mittels eines Prägestempels oder einer Prägerolle eingebracht wird. Ein Einbringen der Information erfolgt über einen Laserstrahl, der unter unterschiedlichen Richtungen Informationen durch das Linsenraster in den Kartenkörper einbringt. So lassen sich auf einfache Weise Kippbilder realisieren.

Bei den aus dem Stand der Technik bekannten Verfahren und hieraus resultierenden Sicherheitsdokumenten, bei denen zunächst eine optische Struktur, vorzugsweise eine optische Struktur in Form eines Linsenrasters, in eine Oberfläche eingebracht wird und anschließend die Information mittels eines Laserstrahls über ein Bewirken irreversibler Materialveränderungen eingebracht wird, sind im Wesentlichen nur Informationen in Form von Grauwerten speicherbar. Darüber hinaus kann ein nachträgliches Zufügen von Informationen durch eine erneute Laserbestrahlung zum Verfälschen des Sicherheitsdokuments genutzt werden. Vollfarbige oder bunte Informationsspeicherungen sind in der Regel nicht möglich. Bei dem aus der WO 03/022598 A1 bekannten Verfahren lässt sich die Information zwar farbig, insbesondere bunt, drucken, jedoch ist eine erreichbare Auflösung für ein betrachtungswinkelabhängiges Sicherheitsmerkmal dadurch begrenzt, dass beim Einfügen und Integrieren der Druckinformation in den Dokumentkörper im Laminationsverfahren auftretende Schrumpfungsprozesse sowie eine exakte Ausrichtung der Druckinformation innerhalb des Dokumentkörpers und insbesondere relativ zu in einem Laminierverfahren zeitgleich eingebrachten Mikrolinsen nur unzureichend gewährleistet ist.

Der Erfindung liegt somit die technische Aufgabe zugrunde, ein Verfahren zur Herstellung eines Sicherheitsdokuments mit einem betrachtungswinkelabhängigen Sicherheitsmerkmal sowie ein solches Sicherheitsdokument dahingehend zu verbessern, dass feiner aufgelöste Informationsstrukturen sowie neuartige Sicherheitsmerkmale realisierbar sind.

### Grundzüge der Erfindung

Der Erfindung liegt die Idee zugrunde, zunächst in das Dokument die verschiedenen für die Wahrnehmung bei einer Sichtprüfung vorgesehenen Informationsgehalte in Form einer optisch erfassbaren Information in einen Dokumentkörper zu integrieren, beispielsweise indem die Informationsgehalte drucktechnisch auf ein Substrat aufgebracht werden und dieses Substrat in einen Dokumentkörper integriert wird. Hierbei wird die optisch erfassbare Information (beispielsweise die Druckinformation) so ausgestaltet eingebracht, dass diese im fertiggestellten Dokumentenkörper für eine optimale betrachtungswinkelabhängige Informationswiedergabe durch eine in die Oberfläche des hergestellten Dokumentkörpers einzubringende optische Oberflächenstruktur wiedergebbar ist. Um nun hoch aufgelöste Druckstrukturen der Informationsgehalte optimal betrachtungswinkelabhängig wiederzugeben, d.h. unter vorgegebenen Betrachtungswinkeln des Sicherheitsdokuments abzubilden, ist eine passergenaue Ausrichtung der in die Dokumentoberfläche einzubringenden optische Struktur, welche - vorzugsweise in Form von Mikrolinsen ausgebildet wird, notwendig. Hierzu ist es vorgesehen, zunächst die in den Dokumentkörper integrierte optisch erfassbare Information optisch zu erfassen und mindestens ein Merkmal der erfassten optischen Information auszuwerten. Anhand des ausgewerteten Merkmals werden ein oder mehrere Werkzeuge relativ zu dem Dokumentkörper und hierüber zu der optisch erfassbaren Information ausgerichtet und anschließend passergenau zu der integrierten optisch erfassbaren Information die optische Struktur, d.h. insbesondere die Mikrolinsen, in die Oberfläche eingebracht. Man erhält so ein Sicherheitsdokument mit einem Dokumentkörper, in dem eine optisch erfassbare Information integriert ist, wobei in einer Oberfläche des Dokumentkörpers eine optische Struktur, insbesondere Mikrolinsen, ausgebildet ist bzw. sind, durch die optisch erfassbare Information für eine Wahrnehmung abgebildet wird, wobei die optische Struktur bzw. die Mikrolinsen nach einem Herstellen des Dokumentkörpers passergenau zu der gedruckten Druckinformation in die Oberfläche eingebracht ist bzw. sind.

Vorteil der passergenauen Ausrichtung ist die Möglichkeit, eine betrachtungswinkelabhängige Wiedergabe zu realisieren, welche unter exakt vorgegebenen Betrachtungswinkeln erfolgen kann. Dieses bedeutet, dass bei einer Vielzahl von Dokumenten diese vorgegebenen Betrachtungswinkel jeweils gleich sind. Dieses führt dazu, dass der Betrachtungswinkel als zusätzliches Echtheitsmerkmal verwendet werden kann und eine Nachstellung eines solchen Dokuments nur mit der erforderlichen Passergenauigkeit erfolgen kann. Eine Manipulation der Information führt jedoch im Allgemeinen zur Zerstörung der Passergenauigkeit, sodass eine Manipulation durch eine Veränderung der Betrachtungswinkel offensichtlich wird. Somit wird die Sicherheit deutlich erhöht.

Der Informationsgehalt kann jede Art von Information umfassen, insbesondere Informationen, welche statisch, individualisierend oder personalisierend sind. Unter statischen Informationen versteht man Informationen, welche für alle Dokumente einer Art gleich sind, so zum Beispiel die Angabe des ausgebenden Landes oder ein Hintergrunddruck. Individualisierende Informationen sind spezifisch für ein einzelnes Dokument, zum Beispiel eine Seriennummer. Personalisierende Informationen sind Informationen, welche den Träger des Dokuments identifizieren, zum Beispiel sein Name oder sein Gesichtsbild.

### Definitionen

Als Oberflächenrelief wird jede Struktur betrachtet, die von einer planen Ebene abweicht. Eine optische Struktur oder eine optische Oberflächenstruktur ist ein Relief, das elektromagnetische Strahlung, insbesondere sichtbares Licht, bricht und gemäß der geometrischen Optik abbildet. Optische Strukturen bzw. optische Oberflächenstrukturen umfassen insbesondere Mikrolinsen, Fresnellinsen und Lentikularlinsen. Mikrolinsen oder Lentikularlinsen sind Linsen, deren Krümmungsradien im Mikrometerbereich liegen (1 µm bis 1 mm). Die Krümmungsform kann sphärisch, asphärisch oder eine Freiform sein. Ein Linsenarray ist eine regelmäßige rasterartige Anordnung von Linsen. Mikrolinsen können auch in einem 2D-Raster ausgebildet sein und/oder jeweils eine rotationssymmetrische Gestalt aufweisen.

Unter Druckinformation werden Informationen verstanden, welche mittels einer Drucktechnik eingebracht sind oder werden. Übliche Drucktechniken sind Hochdruck, insbesondere in der Ausprägung Letterset, Flachdruck, insbesondere in der Ausprägung Offset, Tiefdruck, insbesondere in den Ausprägungen Stichtiefdruck und Rastertiefdruck, Durchdruck, insbesondere in der Ausprägung Siebdruck, sowie Digitaldruck, insbesondere in den Ausprägungen Inkjet-Druck, Thermotransfer-Druck, Dye-Diffusion-Thermotransfer-(D2T2)-Druck, Retransfer-Druck, und Thermosublimation-Druck.

Eine optisch erfassbare Information ist jede Information, die durch eine Oberfläche eines Dokumentkörpers grafisch mit einem optischen Sensor erfassbar ist.

Hierbei kann eine Erfassung im sichtbaren Wellenlängenbereich, im UV- oder IR-Wellenlängenbereich erfolgen.

Die erfasste Information ist die grafisch erfasste Information. Diese kann hinsichtlich eines erfassten Gehalts hinter einem erfassbaren Gesamtgehalts der erfassbaren Information zurückbleiben. Dies gilt beispielsweise dann, wenn ein Informationsgehalt mit lumineszierenden Farbmitteln eingebracht ist, die im sichtbaren Wellenlängenbereich nicht erfassbar sind, ohne dass eine Anregung der Lumineszenz erfolgt. Die erfasste Information wird diesen Informationsgehalt grafisch nicht umfassen, sofern die optisch erfassbare Information ohne eine Anregung der Lumineszenz erfasst wird.

Farbig ist eine erfassbare Information, wenn sie bei einem menschlichen Betrachte einen Farbeindruck beim Betrachten hervorruft, wobei Grautöne, Weiß und Schwarz nicht als farbig angesehen werden. Auch lumineszierende Farbmittel, die nur bei entsprechender Anregung einen Farbeindruck hervorrufen, werden als farbig angesehen..

Als Farbe wird ein Farbeindruck bei einer Wahrnehmung angesehen. Auch Grautöne, Weiß und Schwarz stellen in diesem Sinn eine Farbe dar.

Bunt ist eine Information, wenn diese mehrere farbige Farben umfasst. Eine bunte Information ist somit nicht monochrom.

Eine optisch erfassbare Information "im Innern eines Dokumentkörpers integrieren" bedeutet, dass die Information so in den Dokumentkörper eingebracht wird, dass diese im fertigen Dokumentkörper einen Abstand zu den Oberflächen des Dokumentkörpers aufweist.

### Bevorzugte Ausführungsformen

Gemäß einer bevorzugten Ausführungsform umfasst das Verfahren zur Herstellung eines Sicherheitsdokuments folgende Schritte: Drucken einer Druckinformation (welche die optisch erfassbare Information repräsentiert) auf eine Substratschicht; Integrieren der bedruckten Substratschicht in einen Dokumentkörper und Einbringen von Mikrolinsen in eine Oberfläche des Dokumentkörpers, wobei das Einbringen der Mikrolinsen nach dem Integrieren der bedruckten Substratschicht in den Dokumentkörper erfolgt, indem die in den Dokumentkörper integrierte Druckinformation optisch erfasst wird und mindestens ein Merkmal der erfassten Druckinformation ausgewertet wird und anhand des ausgewerteten Merkmals ein oder mehrere Werkzeuge relativ zu dem Dokumentkörper ausgerichtet werden und anschließend passgenau zu der integrierten Druckinformation die Mikrolinsen in die Oberfläche eingebracht werden. Bei der Substratschicht kann es sich um jede beliebige Schicht handeln, die in einen Dokumentkörper integriert werden kann. Beispielsweise kann es sich um eine Papier- oder Zellstoffschicht, besonders bevorzugt jedoch um eine Kunststoffschicht handeln. Der Dokumentkörper selbst ist auf Basis eines oder mehrerer Kunststoffe hergestellt. Zumindest zwischen der gedruckten Information und einer Oberfläche des Dokumentkörpers muss der Dokumentkörper aus einem transparenten Kunststoff gebildet sein, um eine Abbildung der Druckinformation über die in die Oberfläche eingebrachten Mikrolinsen bei einer Sichtprüfung zu ermöglichen. Als Materialien für die Herstellung eines Dokumentkörpers eignen sich insbesondere dünne Kunststoffschichten, deren Materialstärke in der Regel wesentlich geringer als deren flächige Ausdehnung ist. Als Kunststoffmaterialen kommen insbesondere solche in Betracht, welche auf Basis eines Polymerwerkstoffs aus einer Gruppe umfassend PC (Polycarbonat), insbesondere Bisphenol-A-Polycarbonat, PET (Polyethylenterephthalat), PMMA (Polymethylmethacrylat), TPU (Thermoplastische Polyurethan-Elastomere), PE (Polyethylen), PP (Polypropylen), PI (Polyimid oder Polytransisopren), ABS (Acrylnitril-Butadien-Styrol), PVC (Polyvinylchlorid) und Copolymeren solcher Polymere gebildet sind. Der Dokumentkörper wird zunächst mit einer möglichst ebenen Oberfläche erzeugt, die vorzugsweise parallel zu der bedruckten Substratoberfläche, d. h. einer Ebene der Druckinformation, orientiert ist, um eine möglichst unverzerrte Wahrnehmung der Druckinformation zu ermöglichen.

Das Erfassen der Druckinformation vor dem Einbringen der Mikrolinsen erfolgt in der Regel durch die Oberfläche, in welche die Mikrolinsen anschließend eingebracht werden.

Besonders bevorzugt wird die optisch erfassbare Information so ausgebildet, dass diese mindestens zwei unterschiedliche Informationsgehalte für ein Kippbild umfasst, so dass in dem fertiggestellten Sicherheitsdokument für eine Betrachtung der optisch erfassbaren Information durch die passgenau aufgebrachten Mikrolinsen mindestens zwei unterschiedliche Betrachtungswinkel existieren und unter einem der mindestens zwei unterschiedlichen Betrachtungswinkel einer der mindestens zwei unterschiedlichen Informationsgehalte sichtbar ist und unter einem anderen der mindestens zwei unterschiedlichen Betrachtungswinkel ein von dem einen Informationsgehalt verschiedener anderer der mindestens zwei unterschiedlichen Informationsgehalte sichtbar ist. Eine solche Ausgestaltung der Informationsgehalte ermöglicht es, sogenannte Kippbilder in dem Dokument zu speichern. Ist das Dokument so ausgebildet, dass unter voneinander verschiedenen Betrachtungswinkeln unterschiedliche Informationsgehalte sichtbar sein sollen, so werden die unter dem jeweiligen Betrachtungswinkel sichtbaren Informationsgehalte bei einer Verwendung von zylindrischen Mikrolinsen zunächst jeweils in Streifen unterteilt. Der Informationsgehaltsanteil eines jeden Streifens wird komprimiert und hierbei so verzerrt, dass diese Verzerrung die durch die entsprechende Mikrolinse bei der Betrachtung auftretende Abbildungsverzerrung kompensiert und der Informationsgehalt durch den Betrachter als unverzerrt wahrgenommen wird. Abhängig vom Krümmungsradius und Brechungsindex des Kunststoffs des Dokumentkörpers wird unter einem Betrachtungswinkel jeweils nur ein streifenförmiger Ausschnitt einer beabstandet unterhalb der Mikrolinse angeordneten Ebene abgebildet, beispielsweise einer Substratschicht, auf die die optisch erfassbare Information (beispielsweise als Druckinformation) aufgebracht ist. Die unterschiedlichen Informationsgehalte werden somit auf solche Streifen komprimiert und können streifenweise verschachtelt werden, so dass aus den unterschiedlichen verschiedenen Betrachtungsrichtungen jeweils die unterschiedlichen Informationsgehalte wahrnehmbar sind.

Wird beispielsweise die optisch erfassbare Information, beispielsweise als Druckinformation, mit zwei Informationsgehalten ausgebildet, ist ein erster Informationsgehalt unter einem ersten Winkel α und ein zweiter Informationsgehalt unter einem zweiten Winkel β zu betrachten. Hierbei werden die Winkel α und β zur Flächennormalen der Dokumentenoberfläche betrachtet. Im Falle von Lentikularlinsen werden diese Winkel α, β in einer Ebene bestimmt, die senkrecht zur Orientierung der Lentikularlinsen ausgerichtet ist. Im Falle von anders geformten Linsenarrays weist der erste Winkel α eine Komponenten α₁ auf, welche parallel zur Längsrichtung des Dokuments orientiert ist und eine Komponente α₂, welche parallel zur Querrichtung des Dokuments orientiert ist. Analog weist der Winkel β in diesem Falle entsprechende Komponenten β₁ und β₂ auf. Für den Fall der Lentikularlinsen ist eine übliche Geometrie, dass der erste Informationsgehalt unter einem ersten Winkel α zu betrachten ist und der zweite Informationsgehalt symmetrisch hierzu unter einem zweiten Winkel β = - α. Beispielsweise sieht man bei der Verkippung des Dokuments um 30° zur einen Seite gegenüber einer Betrachtung entlang der Oberflächennormale den ersten Informationsgehalt, bei Verkippung um 30°zur anderen Seite den zweiten Informationsgehalt. Es ist jedoch keine Notwendigkeit, dass der erste und der zweite Winkel dem Betrage nach gleich sind.

Besonders bevorzugt wird die optisch erfassbare Information so ausgebildet, dass diese mehr als zwei unterschiedliche Informationsgehalte aufweist, insbesondere 4 bis 12, bevorzugt 8 bis 10. Die hohe Anzahl an Informationsgehalten wird dadurch ermöglicht, dass hochauflösende Druckverfahren in Kombination mit der passergenauen Positionierung der Linsen eingesetzt werden können. Üblicher Weise werden derartige Kippbilder mittels Lasergravur durch ein Linsenraster eingebracht. Nachteil hierbei ist, dass die Fokussierung der Laserstrahlung in z-Richtung (senkrecht zur Dokumentenoberfläche) schlecht ist. Hierdurch wird der jeweils eingebrachte Informationsgehalt über einen breiten Winkelbereich sichtbar. Wird die optisch erfassbare Information hingegen als Druckinformation zum Beispiel mittels Inkjet eingebracht, so ist die Schichtdicke in z-Richtung extrem gering, die Einbringung kann exakt in der Brennebene der Linsen erfolgen. Somit sind die Informationsgehalte nur über einen wesentlich geringeren Winkelbereich wahrnehmbar. Somit können mehr Informationshalte eingebracht werden.

Hierdurch ist insbesondere die Einbringung von autostereoskopischen personalisierten Daten möglich, insbesondere eines Gesichtsbildes. Autostereoskopische Bilder zeichnen sich dadurch aus, dass ein Informationsgehalt, ein erstes Teilbild, von dem einen Auge, ein anderer Informationsgehalt, ein zweites Teilbild, von dem anderen Auge wahrgenommen wird, wobei der durchschnittliche Augenabstand, z.B. 6 cm, und der durchschnittliche Leseabstand, z.B. 40 cm, bei der Dimensionierung des Linsenrasters zu berücksichtigen sind. Um einen räumlichen Eindruck zu erzeugen, werden üblicherweise wenigstens 8 Teilbilder eingebracht.

Bevorzugt erfolgt die Einbringung der optisch erfassbaren Information als Druckinformation mittels Drucktechnik, besonders bevorzugt ist die Einbringung der Druckinformation mittels Digitaldrucks, insbesondere in den Ausprägungen Inkjet-Druck, Thermotransfer-Druck, Dye-Diffusion-Thermotransfer-(D2T2)-Druck, Retransfer-Druck, und Thermosublimations-Druck.

Weitere Einbringungsmöglichkeiten sind insbesondere eine Lasergravur, welche zur Einbringung von Schwärzung in Polymermaterialien wie oben beschrieben aus dem Stand der Technik bekannt ist, sowie Belichtungsverfahren, insbesondere für Fotopapiere oder Volumenhologramme. Weiter kann eine Information auch mittels eines metallisierten Fadens eingebracht werden. Die Lasergravur wird aufgrund einer sich in der Regel ergebenden relativ großen Ausdehnung der Markierungen senkrecht zur Oberfläche des Dokumentkörpers nur nachrangig verwendet.

Bei einer Ausführungsform der Erfindung ist der wenigstens eine erste Informationsgehalt in einer ersten Farbe und der wenigstens eine zweite Informationsgehalt in einer zweiten Farbe dargestellt. Unter Farbe sind alle wahrnehmbaren Farbeindrücke inklusive Schwarz, Grau und Weiß zu verstehen. Beispielsweise können auch der erste und der zweite Informationsgehalt bis auf die Farbe identisch sein, sodass sich bei der Betrachtung nur ein Farbwechsel ergibt.

In einer weiteren Ausführungsform sind die Informationsgehalte so ausgestaltet, dass diese bei geeigneter Anregung eine Lumineszenz zeigen. Möglich ist, dass nur ein Informationsgehalt oder auch mehrere Informationsgehalte eine solche Lumineszenz zeigen. Möglich ist es, dass einer oder mehrere dieser Informationsgehalte bei Betrachtung ohne eine Anregung der Lumineszenz nicht wahrnehmbar sind. Solche Informationsgehalte sind dann nur bei Anregung der Lumineszenz wahrnehmbar. Ebenso ist es möglich, dass einer oder mehrere der Informationsgehalte auch ohne eine Anregung einen Farbeindruck beim Betrachter hervorrufen. Bei Anregung der Lumineszenz ändert sich dann für diese Informationsgehalte der Farbeindruck, den diese hervorrufen.

In einer weiteren Ausführungsform der Erfindung sind die hervorgerufenen Farbeindrücke von mindestens zwei Informationsgehalten ohne Anregung einer Lumineszenz gleich, jedoch bei Anregung einer Lumineszenz unterschiedlich. Diese Ausführungsform hat den Vorteil, dass die winkelabhängig eingebrachten Informationsgehalte nicht ohne weiteres ausgelesen werden können. Ähnliche Ausführungsformen sind auch mit anderen metameren Farben denkbar.

Vorzugsweise wird die optisch erfassbare Information farbig ausgestaltet. Dieses ist besonders vorteilhaft möglich, indem die optisch erfassbare Information drucktechnisch erstellt wird.

Bei einer weiteren Ausführungsform ist vorgesehen, dass die unterschiedlichen Informationsgehalte sich hinsichtlich des von ihnen hervorgerufenen Farbeindrucks unterscheiden.

Ein besonderer Vorteil der Erfassung eines grafischen Merkmals der in den Dokumentkörper integrierten optisch erfassbaren Information und einer Auswertung dieses Merkmals liegt darin, dass ein oder mehrere Werkzeuge, die die Mikrolinsen in den fertigen Dokumentkörper einbringen, passgenau und im Register mit der optisch erfassbaren Information ausgerichtet werden können und somit auch die Mikrolinsen passgenau und im Register mit der eingebrachten optisch erfassbaren Information in den Dokumentkörper eingebracht werden können. Im Gegensatz zu anderen Verfahren ist hierdurch eine sehr viel präzisere Positionierung und Ausbildung der Mikrolinsen relativ zu der bereits in den Dokumentkörper eingebrachten Information möglich. Im Gegensatz zu Verfahren, bei denen die Information erst nach dem Ausbilden der Mikrolinsen in den Dokumentkörper eingebracht wird, können unterschiedliche Personalisierungsverfahren eingesetzt werden und insbesondere auch farbige und bunte Informationsgehalte in dem Dokumentkörper gespeichert werden. Wird als optisch erfassbare Information eine Druckinformation verwendet, so ist eine Auflösung im Wesentlichen durch eine drucktechnische Auflösung der Druckinformation begrenzt.

Durch eine geeignete Ausgestaltung der optisch erfassbaren Information und passgenaue Einarbeitung der Mikrolinsen in die Oberfläche des Dokumentkörpers können neuartige Sicherheitsmerkmale geschaffen werden. Bei Sicherheitsdokumenten, bei denen die unterschiedlichen Informationsgehalte nach dem Ausbilden der Mikrolinsen auf der Oberfläche mittels eines Lasers, wie im Stand der Technik beschrieben, unter unterschiedlichen Richtungen in den Dokumentkörper eingebracht werden, ist es nahezu unmöglich, die Information so auszugestalten, dass einzelne Mikrolinsen für einzelne Betrachtungsrichtungen keine Information abbilden, während die benachbarten Mikrolinsen einen Informationsgehalt abbilden, der ein flächig ausgebildetes, eine wahrnehmbare Färbung aufweisendes ausgefülltes Gebiet darstellt.

Bei einer bevorzugten Ausführungsform des Verfahrens ist daher vorgesehen, dass die optisch erfassbare Information und die davon umfassten Informationsgehalte ausgebildet und die Mikrolinsen passgenau hierzu eingebracht werden, dass bei einer Betrachtung der optisch erfassbaren Information des fertiggestellten Sicherheitsdokuments durch die passgenau aufgebrachten Mikrolinsen unter dem einen der mindestens zwei unterschiedlichen Betrachtungswinkel bei einer Sichtprüfung ohne technische Hilfsmittel ein flächig ausgebildetes Gebiet des einen Informationsgehalts als ausgefüllt bedeckt wahrgenommen wird, jedoch zumindest eine der Mikrolinsen unter dem einen der mindestens zwei unterschiedlichen Betrachtungswinkel keinen sichtbaren Anteil des einen Informationsgehalts innerhalb dieses Gebiets abbildet, so dass bei Zuhilfenahme einer Vergrößerungsoptik in dem flächig ausgebildeten Gebiet zumindest ein Anteil des Gebiets als unbedeckt wahrgenommen wird. Dies bedeutet, dass die optisch erfassbare Information (beispielsweise eine Druckinformation) so ausgebildet wird, dass von einem flächigen Gebiet des Informationsgehalts zumindest ein Anteil, der einer Linse für die Abbildung unter dem einen Betrachtungswinkel zugeordnet ist, aus dem Informationsgehalt entfernt wird. Eine Druckinformation, die das flächige Gebiet beispielsweise darstellt, wird somit für zumindest eine Mikrolinse so verändert, dass beim Drucken der Druckinformation ein Flächenanteil des bedruckten Substrats unverändert (leer) bleibt, der der zumindest einen Mikrolinse zugeordnet ist. Dies bedeutet, dass zumindest für eine Mikrolinse, gegebenenfalls für mehrere Mikrolinsen, die den Mikrolinsen jeweils zugeordneten Anteile des Informationsgehalts entfernt und nicht als Druckinformation auf das Substrat aufgedruckt werden.

Bei einer anderen Ausführungsform der Erfindung ist vorgesehen, dass die optisch erfassbare Information und die Mikrolinsen sowie deren passgenaue Anordnung so aufeinander abgestimmt werden, dass beim Einbringen der Mikrolinsen erste und zweite Mikrolinsen verschachtelt, vorzugsweise alternierend, eingebracht werden, wobei in dem fertiggestellten Zustand des Sicherheitsdokuments die ersten Mikrolinsen unter dem einen Betrachtungswinkel den ersten Informationsgehalt und unter dem anderen Betrachtungswinkel keinen Informationsgehalt abbilden und die zweiten Mikrolinsen unter dem einen Betrachtungswinkel keinen Informationsgehalt unter dem anderen Betrachtungswinkel den anderen, von dem einen Informationsgehalt verschiedenen Informationsgehalt abbilden. Dies bedeutet, dass den ersten Mikrolinsen in der optisch erfassbaren Information nur der erste Informationsgehalt zugeordnet ist und den zweiten Mikrolinsen in der optisch erfassbaren Information nur der zweite Informationsgehalt zugeordnet wird. Die Flächenanteile des Substrats, an denen die zweiten Linsen den ersten Informationsgehalt unter dem ersten Betrachtungswinkel abbilden würden, werden nicht mit der optisch erfassbaren Information versehen, beispielsweise nicht bedruckt, und entsprechend die den ersten Mikrolinsen zugeordneten Flächenanteile des Substrats, die den ersten Informationsgehalt unter dem ersten Betrachtungswinkel abbilden würden, ebenfalls nicht durch Information bedeckt, beispielsweise bedruckt.

Das Einbringen der Mikrolinsen erfolgt vorzugsweise mittels eines Prägewerkzeugs, welches mit einer Ultraschallquelle angeregt wird. Die Ultraschallanregung versetzt das Prägewerkzeug in Schwingungen, so dass bei einem Inkontaktbringen mit der Oberfläche des fertiggestellten Dokumentkörpers Reibung auftritt, die zu einer lokalen Erwärmung der Dokumentkörperoberfläche erfolgt. Da das Prägewerkzeug eine Negativstruktur der Mikrolinsen aufweist, welche in den Dokumentkörper eingebracht werden sollen, findet zunächst eine Erwärmung nur an jenen Stellen statt, an denen das Prägewerkzeug besonders tief in die Dokumentkörperoberfläche eindringen muss. Sukzessive dringt das Prägewerkzeug in die Oberfläche ein und formt die Mikrolinse. Bevorzugt erfolgt die Schwingung senkrecht zur Oberfläche des Sicherheitsdokuments. Es hat sich gezeigt, dass mittels eines Ultraschallprägeverfahrens hochpräzise Mikrolinsen ohne eine starke thermische Belastung des Dokumentkörpers in eine Oberfläche einbringbar sind. Dadurch, dass zunächst die Position eines Merkmals auf oder in dem Dokument optisch erfasst und ausgewertet wird, ist es möglich, das Prägewerkzeug relativ zu dem Dokumentkörper auszurichten, bevor das Einprägen begonnen wird.

Bei einer alternativen Ausführungsform werden die Mikrolinsen mittels Laserablation in die Dokumentoberfläche eingebracht.

Beim Auswerten des mindestens einen Merkmals werden vorzugsweise dessen Position und/oder dessen Orientierung ermittelt. Nutzt man aus, dass die Druckinformation, welche vorzugsweise individuell für den einzelnen Dokumentkörper ist, bekannt ist, kann das ermittelte und ausgewertete Merkmal verwendet werden, um relativ zu dessen Orientierung und Position die Werkzeuge oder das Werkzeug zu positionieren und auszurichten, welches oder welche zum Einbringen der Mikrolinsen verwendet wird oder werden. Beispielsweise kann dies ein Prägestempel oder eine Optik für ein Laserablationsverfahren sein.

Bei einer Ausführungsform wird als das mindestens eine Merkmal eine freistehende Linseninformation gesucht und ausgewertet, wobei eine freistehende Linseninformation ein bedecktes Gebiet, beispielsweise ein bedrucktes Gebiet, ist, welches zumindest an zwei gegenüberliegenden Seiten von unbedeckten (beispielsweise unbedruckten) Gebieten umgeben ist und bei einer Betrachtung des fertiggestellten Sicherheitsdokuments von einer Mikrolinse unter einem vorgegebenen Betrachtungswinkel abgebildet wird. Eine freistehende Linseninformation ist somit die erfasste Information, die einen Informationsgehalt, der entlang einer Richtung maximal ausgedehnt ist, darstellt, und von einer einzelnen der Mikrolinsen in einem vorgegebenen Betrachtungswinkel vollständig abgebildet ist, wobei Flächenanteile, die benachbart in zu dieser erfassten optischen Information angeordnet sind und anderen Informationsgehalten zugeordnet sind, unbedeckt sind. Um eine solche freistehende Linseninformation zu ermitteln, wird in der optisch erfassten Abbildung der optisch erfassbaren Information ein sogenannter Fangbereich festgelegt, in dem aufgrund der Kenntnis der optisch erfassbaren Information eine freistehende Linseninformation erwartet wird. Vorzugsweise wird der Fangbereich an einem Rand, noch bevorzugter an einer Ecke, der optisch erfassten Information festgelegt. Die digitalisierten erfassten Informationen werden pixelweise abgesucht, bis das erwartete Merkmal aufgefunden ist. Anschließend werden dessen Position in der Abbildung und dessen Orientierung ermittelt. Aus einer Kenntnis der Position und Orientierung der Erfassungseinrichtung relativ zu dem Dokumentkörper ist es möglich, ein Werkzeug relativ zu dem Dokumentkörper so zu positionieren und orientieren, dass die Mikrolinsen passgenau und im Register mit der optisch erfassbaren Information in das Dokument eingebracht werden können.

Bei einer anderen Ausführungsform ist vorgesehen, dass als das mindestens eine Merkmal ein freistehender Linsenleerraum gesucht und ausgewertet wird, wobei ein freistehender Linsenleerraum ein unbedecktes Gebiet der Druckinformation ist, das an zumindest zwei gegenüberliegenden Seiten von bedeckten Gebieten begrenzt ist, die bei einer Betrachtung des fertiggestellten Sicherheitsdokuments von benachbarten Mikrolinsen oder unter einem Betrachtungswinkel von einer Mikrolinse unter unterschiedlichen Betrachtungswinkeln abgebildet werden. Ein freistehender Linsenleerraum ist somit ein Gebiet der optisch erfassbaren Information, welches einem Informationsgehalt der optisch erfassten Information zugeordnet ist und unbedruckt ist und dessen benachbarte in der optisch erfassten Information angeordnete Flächenanteile, die an gegenüberliegenden Seiten unmittelbar angrenzen, flächig bedeckt sind.

Wieder eine weitere Alternative sieht vor, dass die optisch erfassbare Information zusätzlich eine Markierung umfasst, die speziell für die Erfassung und Auswertung sowie Positionsbestimmung und eine Orientierungsermittlung vorgesehen ist.

Die optisch erfassbare Information wird bei einer bevorzugten Ausführungsform als Druckinformation in den Dokumentkörper integriert, in dem die Druckinformation auf eine Substratschicht gedruckt wird, welche mit mehreren Substratschichten in einem Laminationsverfahren. zu dem Dokumentkörper zusammengefügt wird.

Werden erste und zweite Mikrolinsen verschachtelt, vorzugsweise alternierend, in das Sicherheitsdokument eingebracht bzw. sind solche Mikrolinsen als erste und zweite Mikrolinsen in ein Sicherheitsdokument eingebracht, so sind diese vorzugsweise identisch ausgebildet.

Besonders bevorzugt sind oder werden die Mikrolinsen in Form eines regelmäßigen Arrays eingebracht.

Um einen Kippeffekt gegenüber einer Verdrehung um eine Achse zu erhalten, sind die Mikrolinsen vorzugsweise als Zylinderlinsen ausgebildet, wobei die Zylinderachsen der Linsen parallel zu der Achse ausgerichtet sind, um die das Sicherheitsdokument gedreht wird, um unterschiedliche Informationsgehalte der Druckinformation wahrzunehmen. Kippeffekte müssen nicht symmetrisch zur Oberflächennormale oder einer anderen Achse ausgebildet sein.

Die Linsenstruktur kann auf dem Sicherheitsdokument einen kleinen flächigen Bereich einnehmen. Vorteil einer Einbringung in einem verhältnismäßig kleinen Bereich ist, dass nur ein verhältnismäßig kleiner und somit leichter Stempel präzise positioniert werden muss.

In einer Ausführungsform ist die Linsenstruktur in Form eines Streifens über das Dokument ausgebildet. Der Streifen hat bevorzugt eine Breite von 2 bis 3 mm. Eine solche streifenförmige Struktur kann entweder als Ersatz für einen aus dem Stand der Technik bekannten Sicherheitsfaden eingesetzt werden oder in Kombination mit einem Sicherheitsfaden. Im letzten Fall trägt der Sicherheitsfaden wenigstens einen Informationsgehalt.

Bei einer weiteren Ausführungsform ist vorgesehen, dass die optisch erfassbare Information eine Druckinformation umfasst oder ist, wobei die Druckinformation auf eine Substratschicht oder das diffraktive Element oder das Fadenelement aufgedruckt ist, und darüber in das Innere des Dokumentkörpers integriert ist, dass der Dokumentkörper aus mehreren Substratschichten hergestellt ist, zwischen die die Substratschicht oder das diffraktive Element oder das Fadenelement gefügt ist.

Nachfolgend wird die Erfindung anhand bevorzugter Ausführungsformen unter Bezugnahme auf eine Zeichnung näher erläutert. Hierbei zeigen:
- Fig. 1: einen schematischen Verfahrensablauf einer Ausführungsform eines Verfahrens zum Herstellen eines Sicherheitsdokuments;
- Fig. 2: einen ersten Informationsgehalt;
- Fig. 3: einen zweiten Informationsgehalt;
- Fig. 4: eine aus dem ersten und dem zweiten Informationsgehalt erstellte Druckinformation;
- Fig. 5: eine Darstellung einer erfassten Druckinformation mit Markierungen, welche als Merkmal auswertbar sind;
- Fig. 6: eine Darstellung der erfassten Druckinformation, in der eine freistehende Linseninformation als Merkmal ermittelt wird;
- Fig. 7: eine schematische Darstellung einer erfassten Druckinformation, in der ein freistehender Linsenleerraum ermittelt wird;
- Fig. 8: eine Schnittdarstellung durch ein Sicherheitsdokument, in welches passgenau zu einer Druckinformation Mikrolinsen eingebracht sind;
- Fig. 9: eine schematische Schnittdarstellung eines weiteren Sicherheitsdokuments, bei dem erste Mikrolinsen unter einem Betrachtungswinkel einen ersten Informationsgehalt und zweite Mikrolinsen nur unter einem zweiten Betrachtungswinkel einen zweiten Informationsgehalt abbilden;
- Fig. 10: eine schematische Darstellung der Wahrnehmung eines Sicherheitsdokuments bei einer Sichtprüfung ohne Hilfsmittel;
- Fig. 11: eine schematische Darstellung der Wahrnehmung des Sicherheitsdokuments unter Zuhilfenahme einer Lupe; und
- Fig. 12: eine schematische Draufsicht auf ein Sicherheitsdokument.

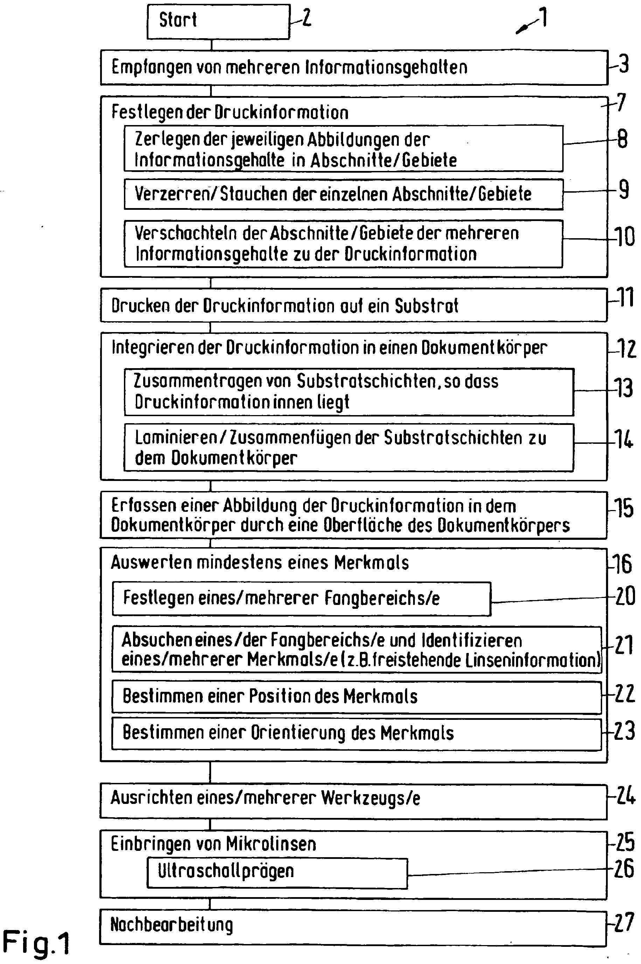

In Fig. 1 ist schematisch ein Ablaufdiagramm 1 eines Verfahrens zum Herstellen eines Sicherheitsdokuments dargestellt. Exemplarisch wird das Integrieren der optisch erfassbaren Information drucktechnisch ausgeführt. Der Begriff Druckinformation wird somit stellvertretend für die optisch erfassbare Information verwendet. Nach dem Starten 2 des Verfahrens werden mehrere Informationsgehalte empfangen 3. In der beispielhaften, hier schematisch erläuterten Ausführungsform werden zwei Informationsgehalte, die voneinander verschieden sind, empfangen.

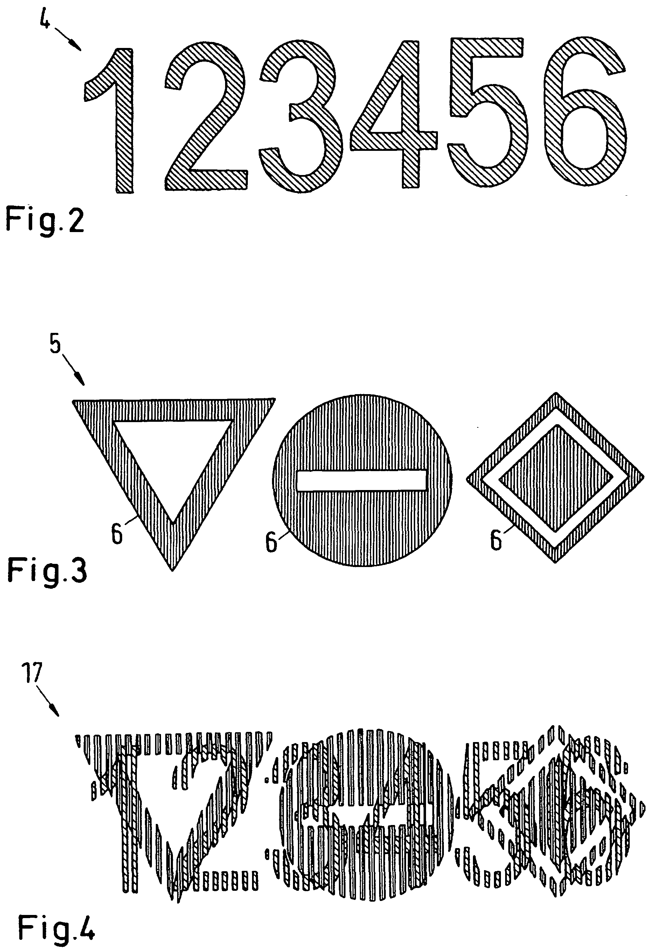

Ein erster Informationsgehalt 4 ist schematisch in Fig. 2 dargestellt. Dieser umfasst nebeneinander die Ziffern 1 bis 6.

In Fig. 3 ist ein zweiter von dem ersten Informationsgehalt 4 verschiedener Informationsgehalt 5 dargestellt, der drei nebeneinander angeordnete Verkehrszeichen 6 umfasst.

Die einzelnen Informationsgehalte können farbig und/oder bunt ausgeführt sein. Bunt bedeutet, dass der Informationsgehalt unterschiedliche farbige Farbeindrücke bei einem Betrachter hervorruft.

Die verschiedenen Informationsgehalte umfassen bei bevorzugten Ausführungsformen individualisierende Informationen, d.h. Informationen, die für eine Person charakterisierend sind, dem das Sicherheitsdokument später zugeordnet wird. Dies bedeutet, dass die Informationsgehalte unterschiedlicher, nacheinander gefertigter Sicherheitsdokumente sich voneinander unterscheiden. Im gezeigten Falle ist der erste Informationsgehalt 4 eine Seriennummer und somit eine individualisierte Information, der zweite Informationsgehalt 5 eine statische Information in Form von Verkehrszeichen.

In einem nachfolgenden Verfahrensschritt wird anhand der empfangenen Informationsgehalte die Druckinformation ermittelt bzw. festgelegt 7. Hierfür werden die Abbildungen der Informationsgehalte, wie sie in den Fig. 2 und 3 dargestellt sind, jeweils in einzelne streifenförmige Abschnitte zerlegt 8. Eine Zerlegung in Streifen findet hierbei statt, da die später in das Dokument einzubringenden Mikrolinsen als Zylinderlinsen ausgebildet sein sollen. Werden sphärische Linsen verwendet, so ist eine entsprechend andere Zerlegung der Abbildungen der Informationsgehalte notwendig. Anschließend werden die einzelnen Abschnitte der verschiedenen Informationsgehalte verzerrt und gestaucht. Die Verzerrung und Stauchung erfolgt in der Weise, dass eine spätere Abbildung eines verzerrten und gestauchten streifenförmigen Abschnitts durch eine zylinderförmige Mikrolinse den Abschnitt unverzerrt wie den ursprünglichen Abschnitt darstellt. Anschließend werden die verzerrten und gestauchten streifenförmigen Abschnitte alternierend verschachtelt, um die endgültige Druckinformation zu erzeugen und festzulegen 10. Diese Druckinformation 17 ist in Fig. 4 schematisch dargestellt.

Die Druckinformation wird auf eine Substratschicht gedruckt. Bei der Substratschicht handelt es sich vorzugsweise um eine Kunststofffolie. Als Druckverfahren kommen sämtliche Druckverfahren in Betracht. Bevorzugt werden jedoch sogenannte digitale Druckverfahren verwendet, die geeignet sind, einzelne individualisierte Druckstücke zu erzeugen. Beispielsweise wird ein Tintenstrahldruckverfahren verwendet. Alternativ können D2T2, Retransfer oder Thermosublimation als Druckverfahren eingesetzt werden. Je nach Ausgestaltung der unterschiedlichen Informationsgehalte wird die Druckinformation farbig, vorzugsweise bunt, d.h. so gedruckt, dass unterschiedliche Farbeindrücke bei einem menschlichen Betrachter durch die farbig gedruckte Druckinformation hervorgerufen werden. Es können aber auch lumineszierende Farben, die nach Anregung lumineszieren, verwendet werden.

Die bedruckte Substratschicht wird anschließend in einen Dokumentkörper integriert 12. Hierzu wird die bedruckte Substratschicht vorzugsweise mit weiteren Substratschichten zu einem sogenannten Substratschichtenstapel zusammengetragen 13. Hierbei erfolgt das Zusammentragen so, dass die bedruckte Substratschichtoberfläche in dem Substratschichtenstapel eine innen liegende Fläche ist, d.h. weder die obere Oberfläche noch die untere Oberfläche des Substratschichtenstapels ist. Die unterschiedlichen Substratschichten werden so gewählt, dass zwischen der Druckinformation und einer Oberfläche des Substratschichtenstapels lediglich transparente Substratschichten angeordnet sind oder diese zumindest in dem Bereich, indem die Druckinformation aufgedruckt ist, transparent sind. Anschließend werden die zusammengetragenen Substratschichten in einem Laminationsverfahren zu einem Dokumentkörper zusammengefügt 14.

Die optisch erfassbare Information kann bei abweichenden Ausführungsformen ganz oder teilweise über ein Einbringen eines diffraktiven Elements, beispielsweise eines Hologramms, eines Fadenelements, beispielsweise einen metallisierten oder teilmetallisierten Faden, oder Ähnlichen in den Dokumentkörper integriert werden.

Der erstellte Dokumentkörper wird einer optischen Erfassungseinrichtung zugeführt. Durch eine Oberfläche, in die später die Mikrolinsen eingebracht werden sollen, wird die Druckinformation, beispielsweise mittels einer Digitalkamera, erfasst. Ist die Druckinformation ganz oder teilsweise mittels bei einer entsprechenden Anregung lumineszierenden Farbmitteln gedruckt, kann die Erfassung bei Anregung der Lumineszenz erfolgen.

Die Abbildung der Druckinformation 17 ist in Fig. 4 schematisch gezeigt. Die erfasste Abbildung wird bezüglich mindestens eines Merkmals ausgewertet 16.

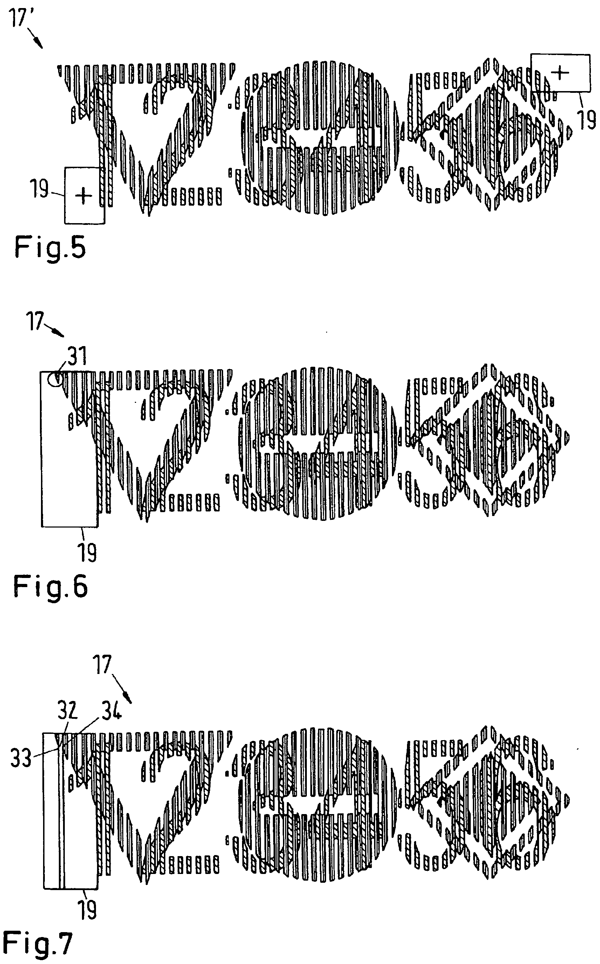

In Fig. 5 ist eine weitere Abbildung einer schematischen Druckinformation 17' gezeigt, der zusätzliche Markierung 18 zugefügt und auf das Substrat aufgedruckt sind, die als Merkmal ausgewertet werden. Zunächst ist es notwendig, ein entsprechendes Merkmal zu identifizieren. Hierzu werden in der Regel ein oder mehrere Fangbereiche 19 festgelegt 20, in denen das oder die auszuwertenden Merkmale erwarten werden. Pixelweise werden der oder die Fangbereiche 19 abgesucht 21. Hierdurch wird das mindestens eine Merkmal identifiziert. Anschließend werden die Position des Merkmals bestimmt 22 und dessen Orientierung ermittelt 23. Da eine Kameraposition relativ zu dem Dokumentkörper bekannt ist bzw. nicht verändert wird, kann aus der Position und Orientierung des ermittelten Merkmals / der ermittelten Merkmale eine Referenzposition in dem Dokumentkörper und eine Referenzorientierung festgelegt werden. Bezüglich dieser werden anschließend ein oder mehrere Werkzeuge ausgerichtet 24. Beispielsweise wird ein Ultraschallprägewerkzeug, welches eine Negativform eines Mikrolinsenarrays von nebeneinander angeordneten Zylinderlinsen aufweist, relativ zu dem Dokumentkörper ausgerichtet und positioniert. Anschließend werden die Mikrolinsen in den Dokumentkörper eingebracht 25, beispielsweise indem ein Ultraschallprägen 26 durchgeführt wird. Anschließend kann das Dokument weiteren Nachbearbeitungsschritten zugeführt werden 27.

Es versteht sich, dass in den Dokumentkörper eine Vielzahl weiterer Sicherheitsmerkmale und Sicherheitselemente eingearbeitet werden können. Beispielsweise können beim Laminieren Mikroprozessoren, Chips, Hologramme oder metallisierte Fäden oder Ähnliches in den Dokumentkörper integriert werden.

Anhand von Fig. 6 und 7 sollen weitere alternative Ausgestaltungen zur Auswertung der erfassten Abbildung der Druckinformation erläutert werden. In Fig. 6 ist erneut die Druckinformation 17 nach Fig. 4 dargestellt. Zusätzlich ist ein Fangbereich 19 festgelegt. Innerhalb dieses Fangbereichs 19 soll eine erste freistehende Linseninformation 31 ermittelt werden. Eine freistehende Linseninformation ist die Information bzw. das Gebiet eines Informationsgehalts, die von einer Mikrolinse abgebildet wird. Freistehend ist die Linseninformation dann, wenn in dem anderen Informationsgehalt "an derselben Stelle" keine Informationen dargestellt werden, d.h. die Druckinformation "leer" ist. In Fig. 7 wird als Merkmal ein freistehender Linsenleerraum 32 ermittelt, indem der Fangbereich 19 pixelweise abgesucht wird. Der freistehende Linsenleerraum 32 ist ein streifenförmiges unbedrucktes Gebiet eines Informationsgehalts. An zwei gegenüberliegenden Seiten 33, 34 ist dieser Linsenleerraum 32 von gedruckten Gebieten eines oder mehrerer anderer Informationsgehalte eingegrenzt.

Eine freistehende Information kann auch gegeben sein, wenn der andere Informationsgehalt "an derselben Stelle" keine Informationen im selben Spektralbereich dargestellt werden, d.h. die Druckinformation im selben Spektralbereich "leer" ist. Ist zum Beispiel der erste Informationsgehalt rot und der zweite Informationsgehalt grün wiedergegeben und das Druckbild mittels einer Drei-Farb-Kamera aufgenommen, so ergibt sich, dass im grünen Teilbild alle Informationen des zweiten Informationsgehalt freistehend sind und alle Informationen des ersten Informationsgehalts im roten Teilbild freistehend sind.

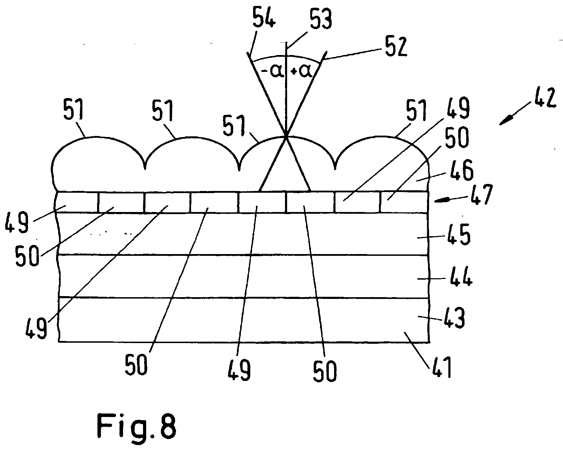

In Fig. 8 ist eine schematische Schnittansicht durch einen fertiggestellten Dokumentkörper 41 eines Sicherheitsdokuments 42 dargestellt. Der Dokumentkörper 41 ist aus Substratschichten 43, die in einem Laminationsverfahren zu dem monolithischen Dokumentkörper 41 zusammengefügt sind, gebildet. Während eine oberste Substratschicht 46 aus einem transparenten Kunststoffmaterial gebildet ist, können die übrigen Substratschichten 43-45 sowohl aus transparentem Kunststoffmaterial als auch aus opakem Kunststoffmaterial bestehen. Die zweitoberste Substratschicht 45 ist mit der Druckinformation 47 an einer der obersten Substratschicht 46 zugewandten Oberfläche 48 bedruckt. Die Druckinformation 47 umfasst erste Gebiete 49, die einem ersten Informationsgehalt zugeordnet sind, und zweite Gebiete 50, die einem zweiten Informationsgehalt zugeordnet sind. In die oberste Substratschicht 46 sind passgenau im Register zu der Druckinformation 47 bzw. den ersten und zweiten Gebieten 49, 50 zylindrische Mikrolinsen 51 eingeprägt. Diese sind zylinderförmig ausgebildet, wobei die Zylinderachsen senkrecht auf der Zeichnungsebene stehen. Jeder Mikrolinse 51 ist genau ein erstes Gebiet 49 und ein zweites Gebiet 50 zugeordnet. Unter einem ersten Betrachtungswinkel bzw. einer ersten Betrachtungsrichtung 52, die einen Winkel α gegen eine Oberflächen normale 53 zu einer gemittelten Dokumentkörperoberfläche darstellt, werden durch die Mikrolinsen 51 jeweils die ersten Gebiete 49 der Druckinformation 47 so abgebildet, dass der unverzerrte erste Informationsgehalt wahrgenommen wird. Unter einer zweiten Betrachtungsrichtung 54, die in diesem Fall einen Winkel β = -α gegen die Oberflächennormale 53 aufweist, werden die zweiten Gebiete 50 der Druckinformation 47 durch die Mikrolinsen 51 abgebildet, so dass der zweite Informationsgehalt unverzerrt wahrgenommen wird. In dem oben erläuterten Beispiel nimmt man unter der ersten Betrachtungsrichtung 52 beispielsweise den Informationsgehalt wahr, wie er in Fig. 2 dargestellt ist, und unter der zweiten Betrachtungsrichtung 54 den zweiten Informationsgehalt, wie er in Fig. 3 dargestellt ist.

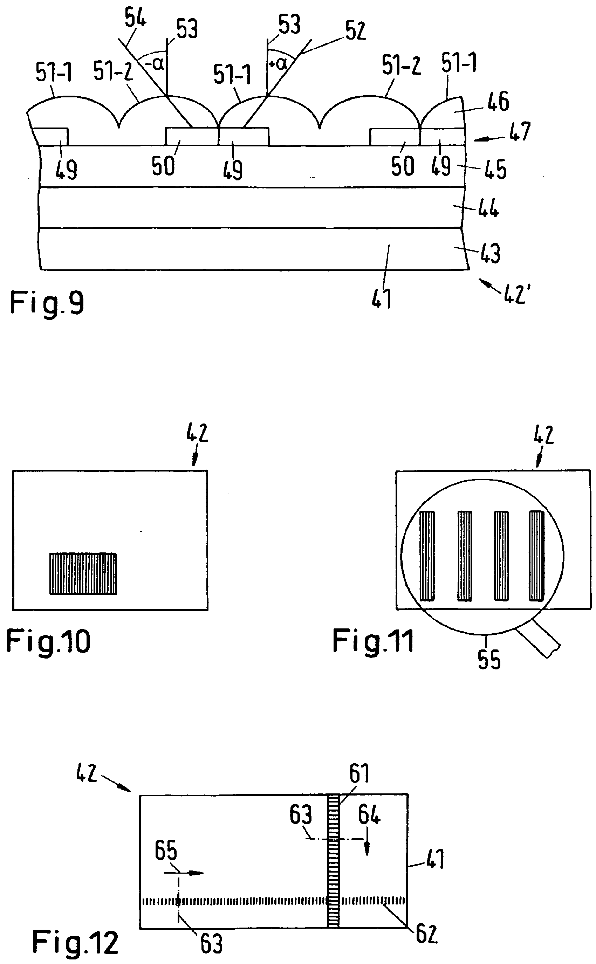

In Fig. 9 ist eine weitere Ausführungsform dargestellt, bei der jeder Mikrolinse 51 jeweils nur ein Informationsgehalt zugeordnet ist. Alternierend ist den Linsen 51 der erste oder der zweite Informationsgehalt zugeordnet. Dies bedeutet, dass ersten Mikrolinsen 51-1 die Gebiete 49 des ersten Informationsgehalts und zweiten Mikrolinsen 51-2 die Gebiete 50 des zweiten Informationsgehalts zugeordnet sind. Dies ist in Fig. 9 schematisch dargestellt. Bei anderen Ausführungsformen müssen die ersten Mikrolinsen und die zweiten Mikrolinsen nicht unbedingt alternierend angeordnet, sonder können auch nach einem anderen Muster angeordnet sein. Ebenso kann die Zahl der ersten Mikrolinsen von der der zweiten Mikrolinsen abweichen. Ebenso können dritte Mikrolinsen vorgesehen sein, die sowohl den ersten Informationsgehalt als auch den zweiten Informationsgehalt unter der jeweiligen entsprechenden Betrachtungsrichtung abbilden.

Bei entsprechend kleiner Dimensionierung der Mikrolinsen und entsprechender Anpassung der Druckinformation , oder allgemein ausgedrückt der optisch erfassbaren Information, ist es möglich, dass bei einer Betrachtung unter einem der zwei Betrachtungsrichtungen bzw. Betrachtungswinkel bei einer Sichtprüfung ohne eine Zuhilfenahme von Hilfsmitteln der Informationsgehalt als ein flächig ausgebildetes Rechteck wahrgenommen wird, wie dies in Fig. 10 schematisch dargestellt ist. Wird jedoch eine optische Vergrößerungseinrichtung, beispielsweise eine Lupe 55, zur Betrachtung verwendet, so wird sichtbar, dass der erste Informationsgehalt nur von jeder zweiten Mikrolinse abgebildet wird bzw. nur jeder zweiten Mikrolinse darzustellende Informationen des Informationsgehalts zugeordnet ist. Dies ist in Fig. 11 schematisch dargestellt. Hierdurch ist es möglich, ein sogenanntes Level-2-Sicherheitsmerkmal herzustellen. Ein solches ist mittels Lasermarkierung in einen Dokumentkörper, der zunächst mit den Mikrolinsen hergestellt und nachträglich markiert wird, nicht oder nur unter einem unvertretbar großen Aufwand herzustellen. Insbesondere ist es Fälschern nahezu unmöglich, mikrolinsengenau Informationen bei einem Verfälschen eines Sicherheitsdokuments in ein solches zu markieren.

Das beschriebene Verfahren eignet sich insbesondere dazu, schmale Mikrolinsenstrukturen auszubilden, wie dies beispielsweise in Fig. 12 gezeigt ist, in der eine schematische Draufsicht auf ein Sicherheitsdokument 42' dargestellt ist. In dem Sicherheitsdokument 42' sind zwei schmal ausgeführte Mikrolinsenarrays 61, 62 ausgebildet. Werden die Mikrolinsen als Zylinderlinsen 63 ausgebildet, so sind die Zylinderachsen der Mikrolinsen 51 vorzugsweise quer, bevorzugt unter 90°, zu den Erstreckungsrichtungen 64, 65 der Mikrolinsenarrays 62 ausgerichtet. Durch die hohe Positionierungsgenauigkeit beim Einbringen der Mikrolinsen ist es möglich, dass die Druckinformation vollständig unter den Mikrolinsenarrays angeordnet ist und dennoch eine optimale Wahrnehmung der unterschiedlichen Informationsgehalte möglich ist.

Bei den beschriebenen Ausführungsformen wurde jeweils davon ausgegangen, dass lediglich zwei Informationsgehalte dargestellt werden sollen. Es ist jedoch möglich, auch mehr Informationsgehalte durch ein Mikrolinsenarray darzustellen. Darüber hinaus ist es möglich, zusätzlich zu der Druckinformation auch andere Sicherheitselemente zu verwenden, relativ zu denen die Mikrolinsen passgenau ausgerichtet werden. Beispielsweise kann zusätzlich oder alternativ zu den Druckinformationen in dem Dokumentkörper ein metallisierter Bereich oder metallisierter Faden eingebracht werden, der anschließend oder zuvor mittels eines Lasers lokal demetallisiert wird, um hierüber eine Information zu speichern. Diese kann dann optisch erfasst werden und hinsichtlich mindestens eines Merkmals ausgewertet werden, um anschließend ein Werkzeug oder mehrere Werkzeuge zum Einbringen der Mikrolinsen zu positionieren und die Mikrolinsen passgenau zu der eingebrachten Information anzupassen.

Durch die Wahl des jeweiligen Inhalts der unterschiedlichen Informationsgehalte lassen sich verschiedenste Effekte erreichen. Die Informationsgehalte können beispielsweise alle denselben Schriftzug zeigen, deren Buchstaben in den einzelnen Informationsgehalten unterschiedlich positioniert sind. So können alle Buchstaben des Schriftzuges bis auf den Anfangsbuchstaben beim Übergang von einem Informationsgehalt zu dem nächsten Informationsgehalt in einer gemeinsamen Richtung um denselben Betrag verschoben sein. Der Anfangsbuchstabe kann beispielsweise jeweils in die andere Richtung verschoben sein. Man erhält bei einer Betrachtung des fertigen Dokuments beim Verkippen einen Bewegungseffekt, bei dem der Anfangsbuchstabe vom Rest des Schriftzuges wegrückt.

Es versteht sich, dass lediglich beispielhafte Ausführungsformen der Erfindung beschrieben sind.

### Bezugszeichenliste

- 1: Ablaufdiagramm
- 2: Start
- 3: Empfangen von Informationsgehalten
- 4: erster Informationsgehalt
- 5: zweiter Informationsgehalt
- 6: Verkehrszeichen
- 7: Festlegen der Druckinformation
- 8: Zerlegen der Abbildungen der Informationsgehalte in Abschnitte/Gebiete
- 9: Verzerren/Stauchen der Abschnitte/Gebiete
- 10: Verschachteln der Abschnitte/Gebiete
- 11: Drucken der Druckinformation
- 12: Integrieren der Druckinformation in ein Dokumentkörper
- 13: Zusammentragen von Substratschichten
- 14: Laminieren/Zusammenfügen der Substratschichten
- 15: Erfassen einer Abbildung der Druckinformation in dem Dokumentkörper
- 16: Auswerten mindestens eines Merkmals
- 17, 17': Druckinformation
- 18: Markierungen
- 19: Fangbereich
- 20: Festlegen eines Fangbereichs
- 21: Absuchen eines Fangbereichs und Identifizieren eines Merkmals
- 22: Bestimmen einer Position des Merkmals
- 23: Bestimmen einer Orientierung des Merkmals
- 24: Ausrichten eines/mehrerer Werkzeugs/e
- 25: Einbringen von Mikrolinsen
- 26: Ultraschallprägen
- 27: Nachbearbeitung
- 31: freistehende Linseninformation
- 32: freistehender Linsenleerraum
- 33, 34: gegenüberliegende Seiten
- 41: Dokumentkörper
- 42,42': Sicherheitsdokument
- 43-46: Substratschichten
- 47: Druckinformation
- 48: Oberfläche
- 49: erste Gebiete
- 50: zweite Gebiete
- 51: Mikrolinsen
- 51-1: erste Mikrolinsen
- 51-2: zweite Mikrolinsen
- 52: erste Betrachtungsrichtung
- 53: Oberflächennormale
- α: Betrachtungswinkel
- 54: zweite Betrachtungsrichtung
- β: Betrachtungswinkel (zweite Betrachtungsrichtung)
- 55: Lupe
- 61: Mikrolinsenarray
- 62: Mikrolinsenarray
- 63: Mikrolinsenachsen
- 64: Erstreckungsrichtung
- 65: Erstreckungsrichtung

## Patentansprüche

1. Verfahren zum Herstellen eines Sicherheitsdokuments (42) umfassend die Schritte:
Integrieren einer optisch erfassbaren Information in einen Dokumentkörper (41) und Einbringen von Mikrolinsen (51) in eine Oberfläche des Dokumentkörpers (41),
**dadurch gekennzeichnet, dass**
das Einbringen der Mikrolinsen (51) nach dem Integrieren der optisch erfassbaren Information in den Dokumentkörper (41) erfolgt, indem die in den Dokumentkörper (41) integrierte optisch erfassbare Information optisch erfasst wird und mindestens ein Merkmal der erfassten optischen Information ausgewertet wird, und anhand des ausgewerteten Merkmals ein oder mehrere Werkzeuge relativ zu der erfassten optischen Information in dem Dokumentkörper (41) ausgerichtet werden und anschließend passgenau zu der integrierten optisch erfassbaren Information die Mikrolinsen (51) in die Oberfläche eingebracht werden.

2. Verfahren nach Anspruch 1, **dadurch gekennzeichnet, dass** die optisch erfassbare Information mindestens zwei unterschiedliche Informationsgehalte (4, 5) für ein Kippbild umfasst, so dass in dem fertig gestellten Sicherheitsdokument (42) für eine Betrachtung der optisch erfassbaren Information durch die passgenau aufgebrachten Mikrolinsen (51) mindestens zwei unterschiedliche Betrachtungswinkel existieren und unter einem der mindestens zwei unterschiedlichen Betrachtungswinkel einer der mindestens zwei unterschiedlichen Informationsgehalte (4, 5) sichtbar ist und unter einem anderen der mindestens zwei unterschiedlichen Betrachtungswinkel ein von dem einen Informationsgehalt verschiedener anderer der mindestens zwei unterschiedlichen Informationsgehalte (4, 5) sichtbar ist.

3. Verfahren nach Anspruch 2, **dadurch gekennzeichnet, dass** die optisch erfassbare Information und die davon umfassten Informationsgehalte (4, 5) ausgebildet und die Mikrolinsen (51) passgenau hierzu eingebracht werden, dass bei einer Betrachtung der optisch erfassbaren Information des fertig gestellten Sicherheitsdokuments (42) durch die passgenau aufgebrachten Mikrolinsen (51) unter dem einen der mindestens zwei unterschiedlichen Betrachtungswinkel bei einer Sichtprüfung ohne technische Hilfsmittel ein flächig ausgebildetes Gebiet des einen Informationsgehalts als ausgefüllt bedeckt wahrgenommen wird, jedoch zumindest eine der Mikrolinsen (51) unter dem einen der mindestens zwei unterschiedlichen Betrachtungswinkel keinen sichtbaren Anteil des einen Informationsgehalts innerhalb dieses Gebiets abbildet, so dass bei zur Hilfenahme einer Vergrößerungsoptik in dem flächig ausgebildeten Gebiet zumindest ein Anteil des Gebiets als unbedeckt wahrgenommen wird.

4. Verfahren nach einem der Ansprüche 2 oder 3, **dadurch gekennzeichnet, dass** die optisch erfassbare Information und die Mikrolinsen (51) sowie deren passgenaue Anordnung so aufeinander abgestimmt werden, dass beim Einbringen der Mikrolinsen (51) erste Mikrolinse (51-1) und zweite Mikrolinsen (51-2) verschachtelt, vorzugsweise alternierend, eingebracht werden, wobei in dem fertig gestellten Zustand des Sicherheitsdokuments (42) die ersten Mikrolinsen (51-1) unter dem einen Betrachtungswinkel (α) der eine Informationsgehalt (4) und unter dem anderen Betrachtungswinkel (β) keinen Informationsgehalt abbilden und die zweiten Mikrolinsen (51-2) unter dem einen Betrachtungswinkel (α) keinen Informationsgehalt und unter dem anderen Betrachtungswinkel (β) den anderen von dem einen Informationsgehalt (4) verschiedenen Informationsgehalt (5) abbilden.

5. Verfahren nach einem der vorangehenden Ansprüche, **dadurch gekennzeichnet, dass** das Einbringen der Mikrolinsen (51) mittels eines Prägewerkzeugs erfolgt, welches mit einer Ultraschallquelle angeregt wird.

6. Verfahren nach einem der Ansprüche 1 bis 4, **dadurch gekennzeichnet, dass** die Mikrolinsen (51) mittels Laserablation ausgebildet werden.

7. Verfahren nach einem der vorangehenden Ansprüche, **dadurch gekennzeichnet, dass** als das mindestens eine Merkmal eine freistehende Linseninformation (31) gesucht und ausgewertet wird, wobei eine freistehende Linseninformation (31) ein bedecktes Gebiet in der erfassten optischen Information ist, welches zumindest an zwei gegenüberliegenden Seiten von unbedeckten Gebieten in der erfassten optischen Information umgeben ist und bei einer Betrachtung des fertig gestellten Sicherheitsdokuments (42) von einer einzelnen Mikrolinse (51) unter einem vorgegebenen Betrachtungswinkel abgebildet wird.

8. Verfahren nach einem der Ansprüche 1 bis 6, **dadurch gekennzeichnet, dass** als das mindestens eine Merkmal ein freistehender Linsenleerraum (32) gesucht und ausgewertet wird, wobei ein freistehender Linsenleerraum (32) ein Gebiet in der optisch erfassten Information ist, das bei einer Betrachtung des fertig gestellten Sicherheitsdokuments (42) von einer einzelnen Mikrolinse (51) unter einem vorgegebenen Betrachtungswinkel abgebildet wird und das an mindestens zwei gegenüberliegenden Seiten (33, 34) von bedeckten Gebieten begrenzt ist, die bei einer Betrachtung unter dem vorgegebenen Betrachtungswinkel des fertig gestellten Sicherheitsdokuments (42) von benachbarten Mikrolinsen (51) oder von der einen einzelnen Mikrolinse (51) unter einem von dem vorgegebenen Betrachtungswinkel verschiedenen Betrachtungswinkeln abgebildet werden.

9. Verfahren nach einem der vorangehenden Ansprüche, **dadurch gekennzeichnet, dass** beim Auswerten des mindestens einen Merkmals, dessen Position und/oder dessen Orientierung ermittelt werden.

10. Verfahren nach einem der vorangegangenen Ansprüche, **dadurch gekennzeichnet, dass** die optisch erfassbare Information zumindest teilweise mittels eines optisch diffraktiven Elements oder eines metallisierten oder teilmetallisierten Fadens in den Dokumentkörper integriert wird.

11. Verfahren nach einem der vorangegangenen Ansprüche, **dadurch gekennzeichnet, dass** das Integrieren der optischen Information die Schritte umfasst: Drucken einer Druckinformation (47) auf eine Substratschicht (45) oder das diffrative Element oder den metallisierten oder teilmetallisierten Faden; und
Integrieren der bedruckten Substratschicht (45) oder des bedruckten diffraktiven Elements oder des metallisierten oder teilmetallisierten Fadens in einen Dokumentkörper (41), so dass das Einbringen der Mikrolinsen (51) nach dem Integrieren der bedruckten Substratschicht (45) in den Dokumentkörper (41) erfolgt.

12. Verfahren nach einem der vorangegangenen Ansprüche, **dadurch gekennzeichnet, dass** die optische Information zumindest teilweise farbig und/oder lumineszierend ausgeführt wird.

## Claims

1. Method for producing a security document (42), comprising the steps of:
Integrating an optically detectable information into a document body (41) and introducing microlenses (51) into a surface of the document body (41),
**characterised in that**
the introduction of the microlenses (51) takes place after the integration of the optically detectable information into the document body (41), and **in that** the optically detectable information integrated into the document body (41) is optically detected, and at least one feature of the optically detected information is evaluated, and, on the basis of the evaluated feature, one or a plurality of tools are aligned relative to the optically detected information in the document body (41) and the microlenses (51) are then introduced into the surface in precise fit to the integrated optically detectable information.

2. Method according to claim 1, **characterised in that** the optically detectable information comprises at least two different information contents (4, 5) for a tilt image, such that, in the completed security document (42), for the observation of the optically detectable information through the microlenses (51) applied in precise fit, at least two different viewing angles exist, and, under one of the at least two different viewing angles, one of the at least two information contents (4, 5) is visible, and, under another of the at least two different viewing angles, an information content is visible which is different from the other of the at least two different information contents (4, 5).

3. Method according to claim 2, **characterised in that** the optically detectable information and the information contents (4, 5) thereby comprised, and the microlenses (51) are introduced in precise fit thereto, that on observation of the optically detectable information of the finished security document (42) through the microlenses (51) introduced in precise fit, under one of the at least two different viewing angles, on a visual examination without technical aids, a flat configured region of the one information content is appraised as being filled out and covered, but at least one of the microlenses (51), under one of the at least two different viewing angles, does not image any visible portion of the one information content within this region, such that, with the assistance of magnifying optics in the flat configured region, at least a portion of the region is appraised as being uncovered.

4. Method according to any one of claims 2 or 3, **characterised in that** the optically detectable information and the microlenses (51), as well as their alignment in precise fit, are matched to one another in such a way that, when the microlenses (51) are introduced, first microlenses (51-1) and second microlenses (51-2) are introduced in nested fashion, preferably alternating, wherein, in the finished state of the security document (42), the first microlenses (51-1), under the one viewing angle (α), image said one information content (4), and under the other viewing angle (β) do not image any information content, and the second microlenses (51-2), under the one viewing angle (α), do not image any information content, and under the other viewing angle (β) image the other information content (5) which is different from the one information content (4).

5. Method according to any one of the preceding claims, **characterised in that** the introduction of the microlenses (51) takes place by means of an embossing tool, which is excited with an ultrasonic source.

6. Method according to any one of claims 1 to 4, **characterised in that** the microlenses (51) are formed by means of laser ablation.

7. Method according to any one of the preceding claims, **characterised in that** a free-standing lens information item (31) is sought and evaluated as the at least one feature, wherein a free-standing lens information item (31) is a covered region in the detected optical information, which is surrounded at least on two opposing sides by uncovered regions in the detected optical information, and, on viewing of the finished security document (42), is imaged by one single microlens (51) under a predetermined viewing angle.

8. Method according to any one of claims 1 to 6, **characterised in that**, as the at least one feature, a free-standing lens empty space (32) is sought and evaluated, wherein a free-standing lens space (32) is a region in the optically detectable information, which, during a viewing of the completed security document (42), is imaged by one single microlens (51) under a predetermined viewing angle, and which, on at least two opposing sides (33, 34), is delimited by covered regions, which, when the finished security document (42) is viewed under the predetermined viewing angle, are imaged by adjacent microlenses (51) or by the one individual microlens (51) under a viewing angle which is different from the predetermined viewing angle.

9. Method according to any one of the preceding claims, **characterised in that**, during the evaluation of the at least one feature, its position and/or its orientation are determined.

10. Method according to any one of the preceding claims, **characterised in that** the optically detectable information is integrated at least partially by means of an optically diffractive element or a metalized or partially metalized thread into the document body.

11. Method according to any one of the preceding claims, **characterised in that** the integrating of the optical information comprises the steps: printing an item of print information (47) onto a substrate layer (45) or onto the diffractive element or onto the metalized or partially metalized thread; and
integrating the imprinted substrate layer (45) or the imprinted diffractive element or the metalized or partially metalized thread (41) into a document body (41), such that the introduction of the microlenses (51) takes place after the integrating of the imprinted substrate layer (45) into the document body (41).

12. Method according to any one of the preceding claims, **characterised in that** the optical information is configured as at least partially coloured and/or luminescing.

## Revendications

1. Procédé de production d'un document de sécurité (42), comprenant les étapes suivantes :
Intégration d'une information détectable de manière optique dans un corps de document (41) et insertion de microlentilles (51) dans une surface du corps de document (41),
**caractérisé en ce que**
l'insertion des microlentilles (51) a lieu après l'intégration de l'information détectable de manière optique dans le corps de document (41) en détectant de manière optique l'information détectable de manière optique intégrée dans le corps de document (41) et en évaluant au moins une caractéristique de l'information optique détectée, et à l'aide de la caractéristique évaluée, en alignant un ou plusieurs outils par rapport à l'information optique détectée dans le corps de document (41), puis en insérant les microlentilles (51) dans la surface en parfaite correspondance avec l'information détectable de manière optique intégrée.

2. Procédé selon la revendication 1, **caractérisé en ce que** l'information détectable de manière optique comprend au moins deux contenus d'information différents (4, 5) pour une image changeante, de sorte qu'il existe au moins deux angles d'observation différents dans le document de sécurité terminé (42) pour une observation de l'information détectable de manière optique à travers les microlentilles (51) appliquées en parfaite correspondance et que, sous l'un des au moins deux angles d'observation différents, un des au moins deux contenus d'information différents (4, 5) est visible et que, sous un autre des au moins deux angles d'observation différents, un autre des au moins deux contenus d'information différents (4, 5) différent du premier contenu d'information est visible.

3. Procédé selon la revendication 2, **caractérisé en ce que** l'information détectable de manière optique et les contenus d'information (4, 5) renfermés par celle-ci sont formés et les microlentilles (51) insérées en parfaite correspondance avec celle-ci, **en ce que**, en cas d'observation de l'information détectable de manière optique du document de sécurité terminé (42) à travers les microlentilles (51) appliquées en parfaite correspondance sous le premier des au moins deux angles d'observation différents dans le cadre d'un examen visuel sans outils techniques, une région formée plate du premier contenu d'information est vue comme recouverte de manière remplie, mais qu'au moins une des microlentilles (51) sous le premier des au moins deux angles d'observation différents ne représente pas une portion visible du premier contenu d'information à l'intérieur de cette région, de sorte qu'en cas de recours à une optique grossissante dans la région formée plate, au moins une portion de la région est vue comme non recouverte.

4. Procédé selon l'une des revendications 2 ou 3, **caractérisé en ce que** l'information détectable de manière optique et les microlentilles (51) ainsi que leur disposition en parfaite correspondance sont ajustées les unes aux autres de telle sorte que, en cas d'insertion des microlentilles (51), des premières microlentilles (51-1) et deuxièmes microlentilles (51-2) sont insérées de manière imbriquée, de préférence en alternance, les premières microlentilles (51-1), à l'état terminé du document de sécurité (42), représentant l'un contenu d'information (4) sous le premier angle d'observation (α) et ne représentant aucun contenu d'information sous l'autre angle d'observation (β) et les deuxièmes microlentilles (51-2) ne représentant aucun contenu d'information sous le premier angle d'observation (α) et représentant l'autre contenu d'information (5) différent du premier contenu d'information (4) sous l'autre angle d'observation (β).

5. Procédé selon l'une des revendications précédentes, **caractérisé en ce que** l'insertion des microlentilles (51) a lieu à l'aide d'un outil d'estampage qui est activé par une source d'ultrasons.

6. Procédé selon l'une des revendications 1 à 4, **caractérisé en ce que** les microlentilles (51) sont formées par ablation au laser.

7. Procédé selon l'une des revendications précédentes, **caractérisé en ce qu'**une information de lentille isolée (31) est recherchée et évaluée en tant que l'au moins une caractéristique, une information de lentille isolée (31) étant une région recouverte dans l'information optique détectée qui, sur au moins deux côtés opposés, est entourée de régions non recouvertes dans l'information optique détectée et qui, en cas d'observation du document de sécurité terminé (42), est représentée par une microlentille individuelle (51) sous un angle d'observation spécifié.

8. Procédé selon l'une des revendications 1 à 6, **caractérisé en ce qu'**un espace vide de lentille isolé (32) est recherché et évalué en tant que l'au moins une caractéristique, un espace vide de lentille isolé (32) étant une région dans l'information détectée de manière optique qui, en cas d'observation du document de sécurité terminé (42), est représentée par une microlentille individuelle (51) sous un angle d'observation spécifié et qui est limitée sur au moins deux côtés opposés (33, 34) par des régions recouvertes qui, lors d'une observation sous l'angle d'observation spécifié du document de sécurité terminé (42), sont représentées par des microlentilles contiguës (51) ou par la microlentille individuelle (51) sous l'un des angles d'observation différents de l'angle d'observation spécifié.

9. Procédé selon l'une des revendications précédentes, **caractérisé en ce que**, lors de l'évaluation de l'au moins une caractéristique, sa position et/ou son orientation sont déterminées.

10. Procédé selon l'une des revendications précédentes, **caractérisé en ce que** l'information détectable de manière optique est intégrée dans le corps de document au moins partiellement à l'aide d'un élément optique de diffraction ou d'un fil métallisé ou partiellement métallisé.

11. Procédé selon l'une des revendications précédentes, **caractérisé en ce que** l'intégration de l'information optique comprend les étapes suivantes :
Impression d'une information d'impression (47) sur une couche de substrat (45) ou sur l'élément de diffraction ou le fil métallisé ou partiellement métallisé ; et
Intégration de la couche de substrat imprimée (45) ou de l'élément de diffraction imprimé ou du fil métallisé ou partiellement métallisé dans un corps de document (41), de sorte que l'insertion des microlentilles (51) a lieu après l'intégration de la couche de substrat imprimée (45) dans le corps de document (41).

12. Procédé selon l'une des revendications précédentes, **caractérisé en ce que** l'information optique est réalisée au moins partiellement en couleur et/ou luminescente.
